# EUROPÄISCHE PATENTSCHRIFT

(11) **EP 1 024 298 B1**
(45) Veröffentlichungstag und Bekanntmachung des Hinweises auf die Patenterteilung: **07.04.2004**
(21) Anmeldenummer: 00100391.2
(22) Anmeldetag: 08.01.2000
(51) Int. Cl.: F15B 11/028, F15B 21/08, G05D 16/20

(54) **Hydraulikaggregat mit veränderbarem Systemdruck**
Hydraulic unit with variable system pressure
Ensemble hydraulique avec pression de système variable

(30) Priorität: 29.01.1999 DE 19903404
(43) Veröffentlichungstag der Anmeldung: 02.08.2000
(73) Patentinhaber: Ludwig Ehrhardt GmbH, 35321 Laubach (DE)
(72) Erfinder: Kröll, Harald, Dipl.-Ing., 35321 Laubach (DE); Pitz, Walter, Dipl.-Ing., 35216 Biedenkopf (DE)
(74) Vertreter: Nachtwey, Eckard

(56) Entgegenhaltungen:
- DE-U- 29 808 294
- PATENT ABSTRACTS OF JAPAN vol. 1995, no. 06, 31. Juli 1995 (1995-07-31) & JP 07 081365 A (AISIN SEIKI CO LTD), 28. März 1995 (1995-03-28)
- PATENT ABSTRACTS OF JAPAN vol. 005, no. 185 (P-091), 25. November 1981 (1981-11-25) & JP 56 114016 A (AIDA ENG), 8. September 1981 (1981-09-08)

## Beschreibung

Die Erfindung bezieht sich auf ein Hydraulikaggregat dessen Systemdruck durch eine gleichzeitige Betätigung eines Druckbegrenzungsventils auf der Druckerzeugerseite und eines Druckschalters auf der Druckverbraucherseite veränderbar ist.

Hydraulikaggregate werden in der Regel als Druckerzeuger mit einem Systemdruck betrieben. Werden diese Aggregate in der Spanntechnik benutzt, so ist eine Einstellung des Systemdruckes an die Gegebenheiten erforderlich. Die Veränderung des Systemdruckes beinhaltet jedoch eine rel. große Fehlerquelle, da mindestens zwei Elemente abhängig von einander eingestellt werden müssen.

Das Hydraulikaggregat bedingt ein Druckbegrenzungsventil, das den maximalen Systemdruck definiert und zugleich für die Sicherheit des Systems bestimmend ist und einen Druckschalter, der für das Leistungsglied, in der Regel der Pumpenmotor, zuständig ist. Die Einstellung des maximalen Druckes erfolgt durch das Druckbegrenzungsventil. Der Pumpenmotor wird dagegen von dem Druckschalter gesteuert. Wird nun eine Änderung des Systemdruckes erforderlich, müssen Druckbegrenzungsventil und Druckschalter in Abhängigkeit von einander verstellt werden. Schon geringe Fehler bei der Einstellung können Schäden verursachen. Hinzu kommt, daß der Druckschalter im unteren Druckbereich ungenau und mit großer Hysterese arbeitet. Eine solche Anpassung des Systemdruckes erfordert somit vom Bedienungspersonal große Sachkenntnis und Erfahrung. Somit wird die Einstellung des Systemdruckes in vielen Fällen zu einem Problem.

Es ist bekannt, das Druckbegrenzungsventil und den Druckschalter mechanisch mit einander zu koppeln und auf einer gemeinsamen Welle anzuordnen. Der Nachteil einer solchen Anordnung ist, daß die mechanische Verstellung über größere Bereiche immer fehlerhaft ist, da die Federkräfte in den Elementen - Druckbegrenzungsventil und Druckschalter - unterschiedlich sind. Infolge ihrer verschiedenen Aufgaben stehen unterschiedliche Drücke an, womit in die Mechanik differenzierte Kräfte einfliessen, die eine exakte Einstellung nicht mehr möglich machen.

Es ist daher Aufgabe der Erfindung, ein System zum Einsatz zu bringen, bei dem nur mit einem Einstellelement der Systemdruck eingestellt wird und die erforderlichen daraus abzuleitenden Einstellparameter elektronisch erzeugt und Steuersignale daraus abgeleitet werden und daß die Definition der Schaltpunkte vom Einstellwert am Druckbegrenzungsventil abhängig macht und zugleich eine Drucküberwachung und Fehlerauswertung, sowie Druckanzeige beinhaltet.

Die Lösung der Aufgabe ist in den kennzeichnenden Merkmalen der Ansprüche enthalten. Der Vorteil ist, daß ein Druckbegrenzungsventil zur Druckeinstellung dient und daß über einen Drucksensor im Zusammenwirken mit einer Elektronik eine Abspeicherung der Parameter zur Erfassung der Druckwerte, sowie der Steuerungs- und Überwachungsfunktionen ermöglicht ist und daß eine Einstellung des Druckbegrenzungsventils möglich ist, wenn gleichzeitig der Regelkreis angesteuert wird.

Die Erfindung wird in den Zeichnungen näher beschrieben.

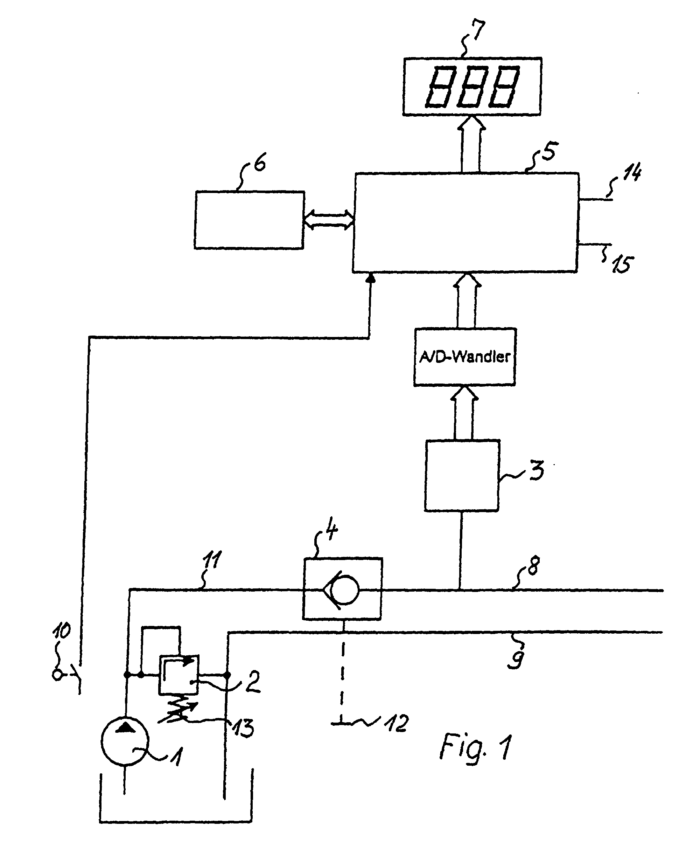

Fig. 1 zeigt ein Blockschaltbild
Fig. 2 zeigt einen Schnitt durch das Hydraulikaggregat

In dem Blockschaltbild ist die Druckeinstellkombination der einzelnen Elemente dargestellt. Die Pumpe 1 erzeugt den im System gewünschten Druck, der durch das Druckbegrenzungsventil 2 bestimmt wird. Dieser Druck baut sich im Pumpenkreis 11 auf und damit auch in der Druckleitung 8. Diese Druckleitung 8 führt zu den Verbraucherelementen, die in Abhängigkeit vom Druck arbeiten. Der Rückfluß erfolgt über die Rückflußleitung 9. In der Druckleitung 8 ist ein Rückschlagventil 4 vorgesehen, das den verbraucherseitigen Druckraum statisch gegenüber dem erzeugerseitigen Druckraum abdichtet. Für die Druckeinstellung muß das Rückschlagventil 4 entsperrt werden. Ferner ist die Druckleitung 8 über einen Drucksensor 3, der zur Ermittlung des verbraucherseitigen, sowie auch des erzeugerseitigen Systemdruckes dient, mit einem Mikrocontroller 5 verbunden. Dieser Mikrocontroller 5 ist das eigentliche Steuerorgan und sorgt für den Ablauf der Druckregelung, ihm werden die Signale vom Drucksensor 3 und vom Positionsschalter 10 zugeführt, zum Zwecke der Steuerung und Überwachung des Druckerzeugers wie Pumpenmotor 1, der Druckanzeige 7, der Fehlerüberwachung bei auftretenden Leckagen oder bei zu hohen Temperaturen. In der Druckanzeige 7 wird der verbraucherseitige Systemdruck, sowie beim Einstellen der Einstelldruck und Sollwert und ferner Meldungen an den Bediener angezeigt.

Dem Mikrocontroller 5 ist ein wieder beschreibbarer, nicht flüchtiger Speicher 6 zugeordnet. In diesem Speicher 6 bleibt jede Information so lange erhalten, bis sie überschrieben wird. Dem Mikrocontroller 5 sind ferner Steuerleitungen 14 u. 15 zugeordnet, von denen die Steuerleitung 14 die Pumpe 1 beeinflußt und die Steuerleitung 15 zur Signalisierung von Fehlern oder Steuervorgängen dient.

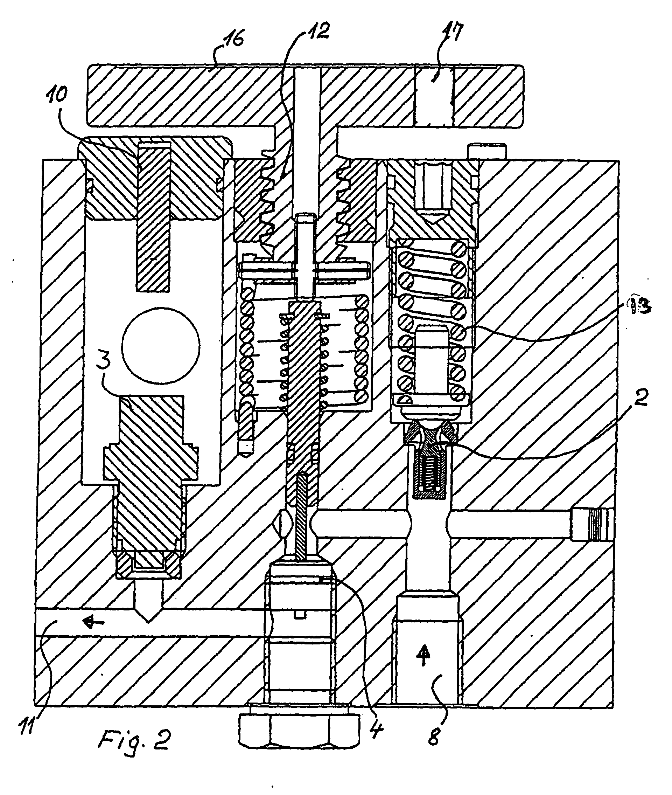

Die Figur 2 zeigt die Anordnung der einzelnen Elemente in einer Ausführung, bei der die Änderungen des Systemdruckes mechanisch vorgenommen werden. Alle Elemente sind in einem Gehäuse angeordnet und bilden eine Einheit. Das Gehäuse beinhaltet die Anschlußmöglichkeiten für den Druckerzeuger und die Druckverbraucher, sowie die elektrischen Anschlüsse. Zur Einstellung dient ein Einstellglied 12, das fest mit einer Rändelscheibe 16 verbunden ist. In dieser Rändelscheibe 16 ist eine Durchgangsbohrung 17 eingebracht. Oberhalb des Druckbegrenzungsventiles 2 ist eine Einstellmechanik 13 vorgesehen. Durch diese Einstellmechanik 13 läßt sich das Druckbegrenzungsventil 2 auf die verschiedenen Systemdrücke einstellen. Die Einstellung soll und darf nur dann erfolgen, wenn sie gleichzeitig an den Mikrocontroller 5 signalisiert und das Rückschlagventil 4 entsperrt ist. Um zu verhindern, daß ungewollte Verstellungen möglich sind, muß somit die Rändelscheibe 16 zuerst solange verdreht werden, bis ihre Bohrung 17 exakt über Einstellmechanik 13 liegt. Nunmehr kann mittels eines Werkzeuges, das in die Einstellmechanik von oben einführbar ist, die Verstellung bewirkt werden. Ist der neue Wert erreicht, wird das Werkzeug entfernt und die Rändelscheibe 16 zurückgestellt. Dem Einstellelement 12 ist ein Positionsschalter 10 zugeordnet. Dieser Positionsschalter 10 erfaßt die Einstellpositionen des Einstellelementes 12 und damit auch jede Veränderung derselben. Somit wird jede Änderung der Einstellung am Einstellelement 12 und damit auch jede Änderung am Druckbegrenzungsventil 2 vom Positionsschalter 10 dem Mikrocontroller 5 signalisiert.

In dem System ist ferner eine Option vorgesehen derart, daß in das gesamte System ein Temperatursensor integriert ist, um Sicherheitsfunktionen, wie Abschaltung bei zu hohen Temperaturen, zu erhalten.

Diese mechanische Lösung kann auch durch eine elektrisch betätigbare ersetzt werden. Hierzu wird dem Einstellelement 12 ein Elektromotor zugeordnet, der unter vorgegebenen Voraussetzungen in den Einstellmechanismus eingreift.

Die Wirkungsweise ist folgende: Das mit einem Einstellelement 12 kombinierte Druckbegrenzungsventil 2 ermöglicht eine Veränderung des Systemdruckes von Hand. Die Verstellung selbst erfolgt mittels eines Werkzeuges, nachdem die Bohrung 17 in der Rändelscheibe 16 über die Einstellmechanik 13 gebracht wurde. Damit wird das Druckbegrenzungsventil 2 frei gegeben. Gleichzeitig ist aber durch die Drehung der Rändelscheibe 16 das Rückschlagventil 4 entsperrt und somit Druckgleichheit am Druckbegrenzungsventil 2 und am Drucksensor 3 hergestellt. Durch die Drehung der Rändelscheibe 16 wird ferner der Positionsschalter 10 betätigt, der ein Signal dem Mikrocontroller 5 zuführt, das diesem mitteilt, daß eine Druckeinstellung erfolgt. Dieses Signal bewirkt im Mikrocontroller 5 ein Signal an die Pumpe abzugeben, so daß diese anläuft.

An der Einstellmechanik 13 wird nun ein neuer Druckwert eingestellt. Der Systemdruck wird vom Mikrocontroller 5 auf dessen Druckanzeige 7 im Display dargestellt. Ist der gewünschte Druck erreicht, wird die Rändelscheibe 16 In ihre Ausgangsstellung zurückgedreht. Hierdurch wird der aktuelle Systemdruck als Sollwert abgespeichert. Das Rückschlagventil 4 ist wieder in Funktion. Da beim Einstellvorgang Druckgleichheit an Druckbegrenzungsventil 2 und Drucksensor 3 besteht, entspricht der gespeicherte Sollwert dem Einstellwert am Druckbegrenzungsventil 2. Die Steuerung kann nun mit Hilfe von Soll- und Istwert die Schaltpunkte für die Pumpe und die Freigabe der Schaltelemente setzen.
Jede Veränderung am Druckbegrenzungsventil 2 wirkt sich somit im Pumpenkreis 11 und damit auch in der Druckleitung 8 aus. Damit sind alle Schaltpunkte definiert und es wird eine Abhängigkeit aller Schaltpunkte sowie Kopplungen der Druckleitung 8, Rückflußleitung 9 und des Pumpenkreises 11 geschaffen. Das Rückschlagventil 4 schließt und die Druckleitung 8 ist entkoppelt. Fällt der Druck in der Druckleitung 8 - gleich aus welchen Gründen - ab, wird dieses über den Drucksensor 3 dem Mikrocontroller 5 signalisiert. Dieser gibt seinerseits sofort über die Signalleitung 14 ein Signal an die Pumpe 1 ab und veranlaßt diese damit den alten Druck wieder herzustellen. Das System ist mit einer Fehlererkennung versehen. Der Mikrocontroller 5 gibt bei allen Änderungen im System Signale ab und beaufschlagt bei Fehlererkennung die Signalleitung 15. Die Signalleitung 15 führt zu Steuergeräten deren Funktion der akustischen oder optischen Anzeige dient oder auch zu Eingriffen in das System benutzt werden kann.

| Bezugszeichen | |
|---|---|
| 1 | Pumpe |
| 2 | Druckbegrenzungsventil |
| 3 | Drucksensor |
| 4 | Rückschlagventil |
| 5 | Microcontroller |
| 6 | Speicher |
| 7 | Druckanzeige |
| 8 | Druckleitung |
| 9 | Rückflußleitung |
| 10 | Positionsschalter |
| 11 | Pumpenkreis |
| 12 | Einsrellelement |
| 13 | Einstellmechanik |
| 14 | Signalleitung |
| 15 | Signalleitung |
| 16 | Rändelscheibe |
| 17 | Durchgangsbohrung |

## Patentansprüche

1. Hydraulikaggregat, dessen Systemdruck durch eine gleichzeitige Betätigung eines Druckbegrenzungsventils auf der Druckerzeugerseite und eines Druckschalters auf der Druckverbraucherseite einstellbar ist, **dadurch gekennzeichnet, daß** einem Mikrocontroller (5) alle erfaßbaren Systemdrücke von einem Drucksensor (3) signalisiert sind und die Einstellung des Systemdruckes am Druckbegrenzungsventil (2) über ein positionierbares Einstellelement (12) erfolgt, dem ein Positionsschalter (10) zugeordnet ist, der die Einleitung des Einstellvorganges dem Mikrocontroller (5) signalisiert und daß die Betätigung des positionierbaren Einstellelementes gleichzeitig ein in der verbraucherseitigen Druckleitung (8) angeordnetes Rückschlagventil (4) entsperrt, zur Herstellung der Druckgleichheit zwischen Druckerzeugerseite und Druckverbraucherseite.

2. Hydraulikaggregat nach Anspruch 1 **dadurch gekennzeichnet, daß** die Verstellung des Druckbegrenzungsventils (2) mechanisch mittels einer dem Einstellelement (12) zugeordneten Rändelscheibe (16) und einer Einstellmachanik (13) erfolgt, in dem durch Drehung der Rändelscheibe (16) eine in ihr eingelassene Durchgangsbohrung (17) über die Einstellmechanik (13) gebracht und ein Spezialwerkzeug hindurchführbar ist, das in die Einstellmechanik eingreift.

3. Hydraulikaggregat nach Anspruch 1 u. 2, **dadurch gekennzeichnet, daß** bei der Drehung der Rändelscheibe (16) in die Arbeitsstellung das Rückschlagventil (4) entsperrt wird.

4. Hydraulikaggregat nach Anspruch 1, **dadurch gekennzeichnet, daß** das vom Positionsschalter (10) an den Mikrocontroller (5) abgegebene Signal im Mikrocontroller (5) die Druckeinstellung signalisiert und diesen veranlaßt, ein Signal an eine Pumpe (1) zur Druckerzeugung abzugeben.

5. Hydraulikaggregat nach Anspruch 1, **dadurch gekennzeichnet, daß** dem Mikrocontroller (5) Signalleitungen (14:15) zugeordnet sind und daß die Signalleitung (14) mit der Pumpe (1) verbunden ist und die Signalleitung (15) zu Steuergeräten führt, die der Fehlererkennung und Beseitigung dienen.

6. Hydraulikaggregat nach Anspruch 1, **dadurch gekennzeichnet, daß** der Mikrocontroller (5) jeden neu eingestellten Systemdruck in einen ihm zugeordneten Speicher (6) schreibt und jeden vorhandenen Systemdruck in einer Druckanzeige (7) anzeigt.

7. Hydraulikaggregat nach Anspruch 1 u. 6, **dadurch gekennzeichnet, daß** in dem Mikrocontroller (5) ein Soll-Ist-Wert Vergleich zwischen dem im Speicher (6) geschriebenen Sollwert und dem tatsächlich in der Druckleitung (8) anstehenden Druck erfolgt und bei Druckdifferenz ein Signal an die Pumpe (1) zum Anlaufen gegeben wird.

## Claims

1. Hydraulic unit wherein the system pressure is adjustable by simultaneous operation of a pressure-limiting valve on the side of the pressure generator side and a pressure switch on the pressure consumption side, **characterised in that** all the detectable system pressures are signalled by a pressure sensor (3) to a micro controller (5) and the system pressure on said pressure-limiting valve (2) is set via a setting element (12) adapted to be positioned, with which a position switch (10) is associated that signals the initiation of the setting operation to said micro controller (5), and that the operation of said setting element adapted to be positioned simultaneously releases a check valve (4) disposed in the pressure line (8) on the consumption side, for establishing the equality of pressures between the pressure generator side and the pressure consumption side.

2. Hydraulic unit according to Claim 1, **characterised in that** the adjustment of said pressure-limiting valve (2) is performed mechanically by means of a thumbwheel (16) associated with said setting element (12) and a setting mechanism (13) in which, when said thumbwheel (16) is rotated, a through-hole (17) formed therein is displaced above said setting mechanism and a special tool can be passed therethrough, which engages in said setting mechanism.

3. Hydraulic unit according to Claims 1 and 2, **characterised in that** when said thumbwheel (16) is rotated into the operative position said check valve (4) is released.

4. Hydraulic unit according to Claim 1, **characterised in that** the signal communicated by said position switch (10) to said micro controller (5) signals the pressure setting in said micro controller (5) and causes the latter to issue a signal to a pump (1) for pressure generation.

5. Hydraulic unit according to Claim 1, **characterised in that** signal lines (14; 15) are associated with said micro controller (5) and that said signal line (14) is connected to said pump (1) whilst said signal line (15) leads to controllers serving to detect and eliminate errors.

6. Hydraulic unit according to Claim 1, **characterised in that** said micro controller (5) writes each newly set system pressure into an associated memory (6) and displays each prevailing system pressure in a pressure display (7).

7. Hydraulic unit according to Claims 1 and 6, **characterised in that** a set value/actual value comparison is carried out in said micro controller (5) between the set value written into said memory (6) and pressure actually prevailing in said pressure line (8) and that a signal is issued to said pump (1) to start the latter.

## Revendications

1. Unité hydraulique, dans laquelle la pression du système est ajustable en par actionnement simultané d'une soupape de limitation de la pression du côté du générateur de pression et d'un interrupteur manométrique du côté du récepteur de pression, **caractérisée en ce que** toutes les pressions détectables du système sont signalées par un capteur de pression (3) à un micro asservisseur (5) et que la pression du système à ladite soupape de limitation de la pression (2) est réglée via un élément de réglage (12) apte à être positionné, auquel est affecté un interrupteur de position (10), qui signale le début de l'opération de réglage audit micro asservisseur (5), et **en ce que** l'opération dudit élément de réglage apte à être positionné dégage en même temps une soupape d'arrêt (4) disposée dans la conduite sous pression (8) du côté récepteur, afin d'établir l'égalité de pressions entre le côté du générateur de pression et le côté récepteur de pression.

2. Unité hydraulique selon la revendication 1, **caractérisée en ce que** le réglage de ladite soupape de limitation de la pression (2) se fait de façon mécanique moyennant une molette (16) affectée audit élément de réglage (12) et un mécanisme de réglage (13), dans lequel, quand ladite molette (16) est tournée, un trou de passage (17) y formé est déplacé au-dessus dudit mécanisme de réglage et l'insertion d'un outil spécial à travers ledit trou devient possible, qui se met en prise dans ledit mécanisme de réglage.

3. Unité hydraulique selon les revendications 1 et 2, **caractérisée en ce que**, quand ladite molette (16) est tournée en sa position de service, ladite soupape d'arrêt (4) est dégagée.

4. Unité hydraulique selon la revendication 1, **caractérisée en ce que** le signal transmis par ledit interrupteur de position (10) audit micro asservisseur (5) signale le réglage de la pression dans ledit micro asservisseur (5) et cause le dernier à émettre un signal à une pompe (1) pour la génération de pression.

5. Unité hydraulique selon la revendication 1, **caractérisée en ce que** des lignes de signalisation (14; 15) sont affectées audit micro asservisseur (5) et **en ce que** ladite ligne de signalisation (14) est reliée à ladite pompe (1) pendant que ladite ligne de signalisation (15) est raccordée aux unités de réglage, qui servent à détecter et remédier des erreurs.

6. Unité hydraulique selon la revendication 1, **caractérisée en ce que** ledit micro asservisseur (5) écrit chaque pression de système nouvellement réglée dans une mémoire affectée (6) et affiche chaque pression de système régnante sur une unité (7) de visualisation des pressions.

7. Unité hydraulique selon les revendications 1 et 6, **caractérisée en ce qu'**une comparaison des valeurs de consigne/valeurs actuelles est réalisée dans ledit micro asservisseur (5) entre la valeur de consigne écrite dans ladite mémoire (6) et la pression actuellement régnante dans ladite conduite sous pression (8), et **en ce qu'**un signal est émis à ladite pompe (1) afin de mettre la dernière en marche.
